(19) 

(11) **EP 4 790 788 A1**

(12) **EUROPEAN PATENT APPLICATION**

(43) Date of publication:
**12.08.2026 Bulletin 2026/33**

(21) Application number: **26153346.7**

(22) Date of filing: **22.01.2026**

(51) International Patent Classification (IPC):
***H01M 10/42*** *(2006.01)* ***H01M 4/04*** *(2006.01)*
***H01M 4/131*** *(2010.01)* ***H01M 4/1391*** *(2010.01)*
***H01M 4/62*** *(2006.01)* ***H01M 4/66*** *(2006.01)*

(52) Cooperative Patent Classification (CPC):
**H01M 4/131; H01M 4/0404; H01M 4/1391; H01M 4/62; H01M 4/622; H01M 4/625; H01M 4/667; H01M 10/4235**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.02.2025 KR 20250015918**

(71) Applicant: **SAMSUNG SDI CO., LTD.**
**Yongin-si, Gyeonggi-do 17084 (KR)**

(72) Inventors:
- **CHO, Youngkwang**
  **17084 Gyeonggi-do (KR)**
- **CHO, MOONJU**
  **17084 Gyeonggi-do (KR)**
- **JEON, Seunghyun**
  **17084 Gyeonggi-do (KR)**
- **LIM, Seunghyun**
  **17084 Gyeonggi-do (KR)**
- **CHOI, Yusun**
  **17084 Gyeonggi-do (KR)**
- **KIM, Hyewon**
  **17084 Gyeonggi-do (KR)**

(74) Representative: **Michalski Hüttermann & Partner mbB**
**Kaistraße 16A**
**40221 Düsseldorf (DE)**

Remarks:
The references to the drawing/ figure no. 13 are deemed to be deleted (Rule 56(4)(6) EPC).

(54) **POSITIVE ELECTRODE FOR RECHARGEABLE LITHIUM BATTERY, AND METHOD FOR MANUFACTURING THE SAME**

(57) The present disclosure relates to a positive electrode. The positive electrode includes a current collector, an adhesive layer on the current collector, a functional layer on the adhesive layer, and a positive electrode active material layer on the functional layer. The functional layer includes a first binder and functional particle, and the adhesive layer includes a second binder. The functional particle includes at least one of boron nitride (BN), aluminum nitride (AlN), alumina ($Al_2O_3$), silicon nitride ($Si_3N_4$), boehmite, zeolite, or kaolinite.

FIG. 1

CTH
ELS
ANO

EP 4 790 788 A1

## Description

BACKGROUND

The present disclosure relates to a rechargeable lithium battery.

With the increase of battery-powered electronic devices such as, e.g., mobile phones, notebook computers, electric vehicles, and the like, the demand for rechargeable batteries with high energy density and large capacity has been increasing. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

SUMMARY

Examples of the present disclosure may improve the interfacial adhesion of the positive electrode, and may provide the stability of the rechargeable lithium battery.

An example embodiment of the present disclosure may include a positive electrode, including a current collector, an adhesive layer on the current collector, a functional layer on the adhesive layer, and a positive electrode active material layer on the functional layer. The functional layer may include a first binder and a functional particle and the adhesive layer may include a second binder. The functional particle may include at least one of boron nitride (BN), aluminum nitride (AlN), alumina ($Al_2O_3$), silicon nitride ($Si_3N_4$), boehmite, zeolite, or kaolinite.

An example embodiment of the present disclosure may include a positive electrode, including a current collector, an adhesive layer on the current collector, a functional layer on the adhesive layer, and a positive electrode active material layer on the functional layer. The functional layer may include a first binder and first functional particle, and the adhesive layer may include a second binder. The first functional particle may have a plate-like particle shape having a long axis and a short axis, and the first functional particle may be arranged such that the long axis is substantially parallel to a plane of the current collector.

An example embodiment of the present disclosure may include a method for manufacturing a positive electrode, including preparing a metal substrate, forming an adhesive layer by applying an adhesive composition on the metal substrate, forming a functional layer by applying a functional composition on the adhesive layer, and forming a positive electrode active material layer by applying a positive electrode composition on the functional layer. The functional composition may include a functional particle and a first binder, and the adhesive composition may include a second binder. The functional particle may include at least one of boron nitride (BN), aluminum nitride (AlN), alumina ($Al_2O_3$), silicon nitride ($Si_3N_4$), boehmite, zeolite, or kaolinite.

BRIEF DESCRIPTION OF DRAWINGS

FIG. 1 schematically illustrates a rechargeable lithium battery.

FIG. 2 is a cross-sectional view of a positive electrode according to example embodiments of the present disclosure.

FIG. 3 is an enlarged cross-sectional view of a positive electrode according to an example embodiment, which is an enlarged view of an "M" region of FIG. 2.

FIG. 4 is an enlarged cross-sectional view of a positive electrode according to an example embodiment, which is an enlarged view of an "M" region of FIG. 2.

FIG. 5 is an enlarged cross-sectional view of a positive electrode according to an example embodiment, which is an enlarged view of an "M" region of FIG. 2.

FIG. 6 is an enlarged cross-sectional view of a positive electrode according to an example embodiment, which is an enlarged view of an "M" region of FIG. 2.

FIG. 7 is a perspective view of a functional particle according to an example embodiment of the present disclosure.

FIGS. 8-12 illustrate a method for manufacturing a positive electrode according to example embodiments of the present disclosure.

FIG. 13 is a flow chart illustrating a method of manufacturing a positive electrode, according to an example embodiment.

## DETAILED DESCRIPTION OF EMBODIMENTS

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The terms used in this description serve only to explain various embodiments and are not intended to limit the present disclosure. Unless explicitly stated otherwise, singular forms may also include plural forms. The terms "comprises/includes" and "comprising/including" do not exclude the presence or addition of one or more other components.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In this description, "metal" includes both metals and metalloids, such as silicon and germanium, in elemental or ionic states.

In this description, "alloy" refers to a mixture of two or more metals.

In this description, "electrode active material" refers to an electrode material capable of undergoing lithiation and delithiation.

In this description, "Positive electrode active material" refers to a positive electrode material capable of undergoing lithiation and delithiation.

In this description, "Negative electrode active material" refers to a negative electrode material capable of undergoing lithiation and delithiation.

In this description, "lithiation" and "lithiate" refer to a process of adding lithium to an electrode active material.

In this description, "delithiation" and "delithiate" refer to the process of removing lithium from an electrode active material.

In this description, "charging" and "charge" refer to the process of providing electrochemical energy to a cell.

In this description "discharging" and "discharge" refer to the process of removing electrochemical energy from a cell.

In this description, "positive electrode" and "cathode" refer to the electrode where electrochemical reduction and lithiation occurs during the discharge process.

In this description, "negative electrode" and "anode" refer to the electrode where electrochemical oxidation and delithiation occurs during the discharge process.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

## Rechargeable lithium battery

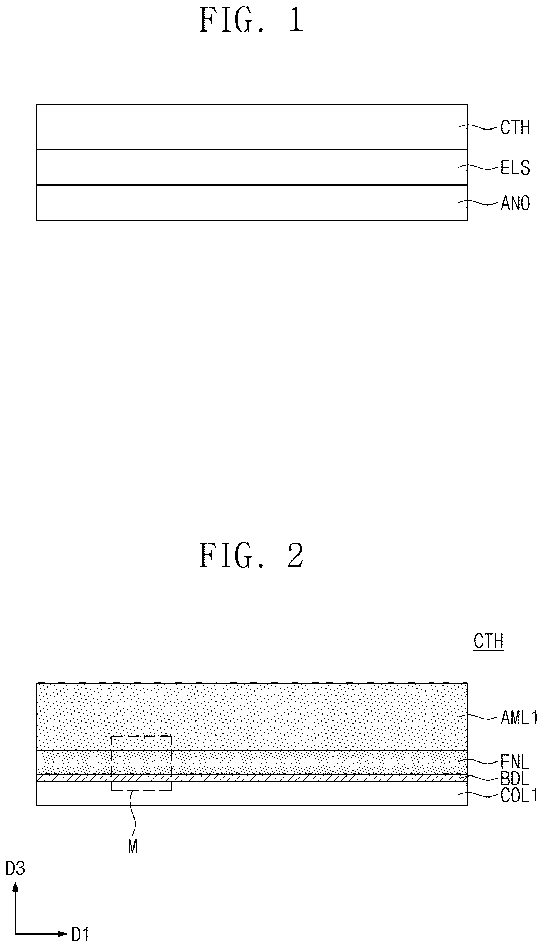

FIG. 1 schematically illustrates a rechargeable lithium battery. Referring to FIG. 1, a rechargeable lithium battery according to example embodiments of the present disclosure may include a positive electrode CTH, a negative electrode ANO, and an electrolyte system ELS between the positive electrode CTH and the negative electrode ANO. As is described below, in this description, the electrolyte system ELS may refer to a system that mediates electrochemical energy exchange between the positive electrode CTH and the negative electrode ANO. The electrolyte system ELS may include, but is not limited to, for example, a solid electrolyte, a liquid electrolyte, or the like. In this description, a "Cell" may be defined as a desired or minimum unit of a rechargeable lithium battery, which is a unit composed of or including a positive electrode CTH, an electrolyte system ELS, and a negative electrode ANO.

A rechargeable lithium battery may experience internal short circuits due to electrode damage caused by external impacts or deformations occurring during the charging/discharging process. For example, when the rechargeable lithium battery is damaged by an external impact, an object having conductivity may penetrate or infiltrate the inside of the cell. A conductive object penetrating the cell may electrically connect the positive electrode CTH and the negative electrode ANO, thereby causing an internal short circuit. The internal short circuit may propagate to adjacent cells within a module or pack, causing thermal runaway.

As such, with the increasing concerns over the safety of rechargeable lithium batteries, various efforts have been made to address these issues. For example, various attempts have been made to develop materials that reduce or prevent internal short circuits within the cell, improve structural design, and enhance safety through battery management systems.

Accordingly, the positive electrode CTH according to the example embodiments of the present disclosure may provide mechanical/electrical stability of the rechargeable lithium battery through the structural design of the electrode.

## Positive Electrode (CTH)

Referring to FIG. 2, a positive electrode CTH according to example embodiments of the present disclosure may include a positive electrode current collector COL1, an adhesive layer BDL, a functional layer FNL, and a positive electrode active material layer AML1. For example, the adhesive layer BDL, the functional layer FNL, and the positive electrode active material layer AML1 may be arranged, e.g., sequentially arranged, on the positive electrode current collector COL1.

The positive electrode current collector COL1 may provide a reference surface on which the positive electrode active material layer AML1 is disposed. The positive electrode current collector COL1 may include, for example, a plate or foil including indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

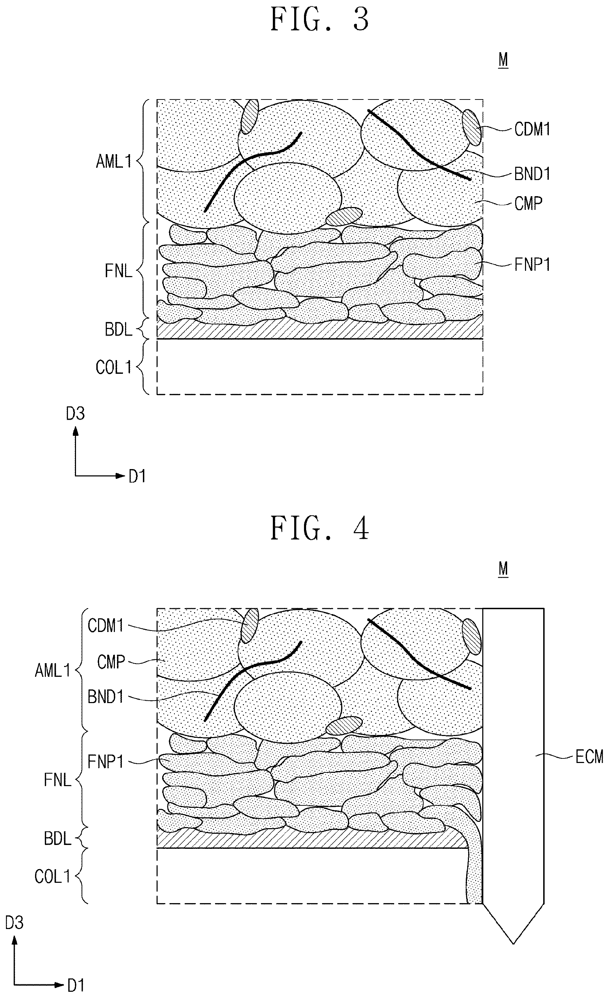

Referring to FIG. 3, a positive electrode CTH according to example embodiments of the present disclosure may include a functional layer FNL. The functional layer FNL may be disposed on at least one surface of the positive electrode current collector COL1. The functional layer FNL may be interposed between the positive electrode active material layer AML1 and the positive electrode current collector COL1. The functional layer FNL may provide mechanical/electrical stability of the positive electrode. The functional layer FNL may reduce or prevent an internal short circuit of the cell. The functional layer FNL may reduce or prevent a short circuit caused by structural deformation or deformation due to, e.g., external impact. For example, the functional layer FNL may improve penetration safety.

In general, when a cell is penetrated by a conductive object, a short circuit may occur while the positive electrode CTH and the negative electrode ANO are electrically connected. For example, the positive electrode current collector and the negative electrode current collector are electrically connected by a conductive object, whereby a closed circuit including an electrode tab is formed, so that an internal short circuit may be caused. In this process, conductive objects may cause direct electron flow between the electrodes, increasing the risk of localized heat generation and thermal runaway.

The positive electrode CTH according to example embodiments of the present disclosure may reduce or prevent internal short circuit through the electrode structure design including the functional layer FNL. The functional layer FNL may have elasticity. The functional layer FNL may have an electrical insulating property. Since the functional layer FNL has elasticity, the functional layer FNL may be physically stretched or deformed when an impact or deformation occurs to block an electrical contact area. For example, a physical barrier is formed in an area where electrical contact may occur due to elasticity of the functional layer FNL, so that an internal short circuit may be effectively reduced or prevented.

As an example, when the conductive object ECM penetrates through the cell as illustrated in FIG. 4, the conductive object ECM may penetrate through the positive electrode current collector COL1. The conductive object ECM may form an electrical path by being in contact with the positive electrode current collector COL1.

Accordingly, the functional layer FNL, being present on the positive electrode current collector COL1, may provide insulation between the conductive object ECM and the positive electrode current collector COL1 upon penetration. Since the functional layer FNL has elasticity, the functional layer FNL may stretch or deform upon penetration due to its elasticity and, as a result, come into contact with the conductive object ECM. The stretched functional layer FNL may physically block contact between the positive electrode current collector COL1 and the conductive object ECM, thereby

hindering or preventing the cell from being electrically connected through the conductive object ECM.

In an example embodiment, a thickness of the functional layer FNL may be in a range of $\geq 0.5$ μm to $\leq 10$ μm, $\geq 0.5$ μm to $\leq 12$ μm, $\geq 0.5$ μm to $\leq 15$ μm, $\geq 0.5$ μm to $\leq 15$ μm, $\geq 5$ μm to $\leq 12$ μm, $\geq 0.5$ μm to $\leq 2$ μm, $\geq 2$ μm to $\leq 5$ μm, or $\geq 0.5$ μm to $\leq 5$ μm. When the thickness of the functional layer FNL is relatively small, the aforementioned electrical blocking effect may not be effectively achieved. When the thickness of the functional layer FNL is relatively large, a resistance of the positive electrode CTH may be excessively or substantially increased, and the performance of the cell may be degraded.

Referring again to FIG. 3, the functional layer FNL may include a first functional particle FNP1. The first functional particle FNP1 may have elasticity. The first functional particle FNP1 may provide elasticity to the functional layer FNL.

In an example embodiment, a Young's Modulus (or Tensile Elastic Modulus) of the functional layer FNL may be in a range of $\geq 0.1$ GPa to $\leq 10$ GPa. When the Young's modulus of the functional layer FNL exceeds the above-described range, the aforementioned electrical blocking effect may not be substantially exhibited because the functional layer FNL has high rigidity.

The Young's modulus of the functional layer FNL may be measured, for example, by peeling off the functional layer FNL. The Young's modulus of the functional layer FNL may be measured by using a universal testing machine (UTM). For example, the Young's modulus may be determined by the slope of the stress-strain curve.

Additionally, the Young's modulus of the functional layer FNL may be measured using nano-indentation. For example, by performing a localized indentation process on the cross-section of the functional layer FNL, the Young's modulus may be determined by measuring changes in load and displacement.

In this description, for example, the "Young's modulus of the functional layer" may be defined as a value measured using a functional layer FNL thin film sample with a thickness of approximately 60 μm.

A first functional particle FNP1 may have an insulating property. The first functional particle FNP1 may provide insulating property to the functional layer FNL.

In an example embodiment, the first functional particle FNP1 may include at least one of boron nitride (BN), aluminum nitride (AlN), alumina (or aluminum oxide) ($Al_2O_3$), silicon nitride ($Si_3N_4$), boehmite, zeolite, or kaolinite. For example, the first functional particle FNP1 may include boron nitride (BN).

For example, the boron nitride may include various forms such as hexagonal boron nitride (h-BN), amorphous boron nitride (a-BN), or the like. For example, the boehmite may include various forms such as spherical, plate-like, rod-like, and porous structure.

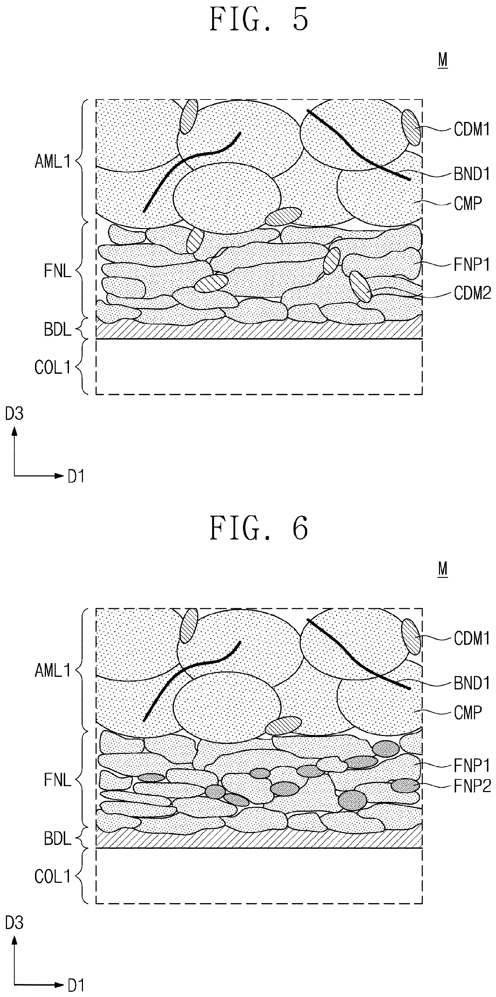

Referring to FIG. 5, the functional layer FNL according to an example embodiment of the present disclosure may further include a conductive material CDM2. The conductive material CDM2 in the functional layer FNL may be the same as, or different from, the conductive material CDM1 in the positive electrode active material layer AML1. The conductive material CDM2 in the functional layer FNL may provide conductivity, thereby reducing the electrical resistance between the positive electrode current collector COL1 and the positive electrode active material layer AML1.

In an example embodiment, the conductive material CDM2 in the functional layer FNL may include at least one of graphite, carbon black, acetylene black, carbon nanotube, carbon nanofiber, carbon nanobelt, carbon nanorod, or graphene.

Referring to FIG. 6, the functional layer FNL according to an example embodiment of the present disclosure may further include a second functional particle FNP2. The second functional particles FNP2 may include at least one of boron nitride (BN), aluminum nitride (AlN), alumina (or aluminum oxide) ($Al_2O_3$), silicon nitride ($Si_3N_4$), boehmite, zeolite, or kaolinite.

The second functional particle FNP2 may be different from the first functional particle FNP1. For example, the second functional particle FNP2 may include a material that is different from the particle of the first functional particle FNP1. The second functional particle FNP2 may have a different particle shape or particle size compared to the first functional particle FNP1. For example, the second functional particle FNP2 may have a different average particle size than the first functional particle FNP1. Additionally, the second functional particle FNP2 may have a different sphericity compared to the first functional particle FNP1. In an example embodiment, the functional layer may include boron nitride as the first functional particle FNP1 and boehmite as the second functional particle FNP2.

The second functional particle FNP2 may fill the voids between the first functional particle FNP1, thereby increasing the density of the functional layer FNL. By increasing the density of the functional layer FNL, a structure of the functional layer FNL may be uniformly maintained within the positive electrode even after a rolling process. A content of the second functional particle FNP2 may be relatively smaller than the content of the first functional particle FNP1.

The first functional particle FNP1 may account for the majority of the weight of the functional layer FNL. In an example embodiment, a content of the first functional particle FNP1 may be in a range of $\geq 50$ wt% to $\leq 95$ wt%, $\geq 85$ wt% to $\leq 90$ wt%, $\geq 65$ wt% to $\leq 75$ wt%, or $\geq 85$ wt% to $\leq 95$ wt%, based on a total weight of the functional layer FNL. By satisfying the above range, the first functional particle FNP1 may effectively contribute to the performance of the functional layer FNL as described above.

The functional layer FNL may include a binder. The binder may provide a binding force between particles in the functional layer FNL, and may provide an adhesion force with an adjacent layer to improve the structural stability of the

positive electrode. A content of the binder in the functional layer FNL may be in a range of ≥ 5 wt% to ≤ 50 wt%, or ≥ 5 wt% to ≤ 15 wt%.

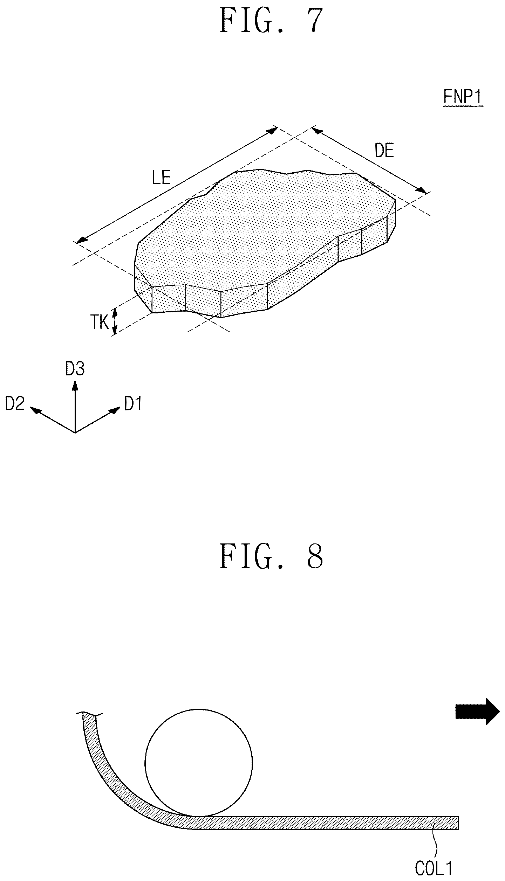

Referring to FIG. 7, in an example embodiment, the first functional particle FNP1 may have a plate-like structure. For example, the first functional particle FNP1 may have a plate-like shape with a major axis and a minor axis. The "major axis" of the first functional particle FNP1 may be defined as the straight-line distance between the two farthest points on the particle boundary. The "minor axis" of the first functional particle FNP1 may be defined as the desired or minimum distance between two points on the particle boundary within a plane perpendicular to the major axis.

Referring to FIG. 7, the first functional particle FNP1 may have a length LE in the first direction D1, a width DE in the second direction D2, and a thickness TK in the third direction D3. For example, the length LE in the first direction D1 may be defined as the "major axis", and the thickness TK in the third direction D3 may be defined as "minor axis".

In an example embodiment, an aspect ratio of the first functional particle FNP1 may be in a range of ≥ 5 to ≤ 30, about 10 to ≤ 30, ≥ 25 to ≤ 30, or ≥ 15 to ≤ 25. The "aspect ratio" of the target particle may be an arithmetic mean value of aspect ratios of approximately 30 randomly or non-systematically selected particles. For example, the "aspect ratio" of the first functional particle FNP1 may be defined as the ratio of the major axis to the minor axis.

In an example embodiment, an average particle size of the first functional particle FNP1 may be in a range of ≥ 5 $\mu$m to ≤ 10 $\mu$m. For example, in the case of plate-like particles, the average particle size of the first functional particle FNP1 may be defined as the average of the major axis lengths. For example, the average particle size may be determined by analyzing a cross-sectional SEM image of the functional layer FNL using software such as, e.g., ImageJ. One hundred first functional particles FNP1 may be randomly or non-systematically selected in the SEM image, and their major axis lengths may be averaged to calculate the average particle size.

In an example embodiment, the first functional particle FNP1 may be arranged such that the major axis is substantially parallel to the plane of the positive electrode current collector COL1. For example, the basal plane of the first functional particle FNP1 having a plate-like structure may be substantially parallel to the positive electrode current collector COL1. As shown in FIG. 3, a plurality of first functional particles FNP1 having a plate-like structure may be substantially horizontally arranged to form a functional layer FNL.

For example, the meaning of "substantially parallel" means that the average of the angles formed between the normal line of each of the plurality of first functional particles FNP1 and the normal line of the positive electrode current collector COL1 falls within a range of ≥ 10° to ≤ 30°. By arranging the first functional particle FNP1 to be substantially parallel to the positive electrode current collector COL1, the effect through elasticity in the functional layer FNL may be improved or maximized.

Referring again to FIGS. 2 and 3, the positive electrode CTH according to example embodiments of the present disclosure may include an adhesive layer BDL. The adhesive layer BDL may be interposed between the positive electrode current collector COL1 and the functional layer FNL. The adhesive layer BDL may provide adhesion between the positive electrode current collector COL1 and the functional layer FNL. The adhesive layer BDL may provide additional adhesion, thereby improving the structural stability of the positive electrode.

By providing adhesion between the positive electrode current collector COL1 and the functional layer FNL, the adhesive layer BDL may allow the functional layer FNL to include a relatively lower content of binder. As a result, the functional layer FNL may contain relatively higher amount of functional particles. Consequently, the performance of the functional layer FNL may be effectively exhibited.

A thickness of the adhesive layer BDL may be smaller than a thickness of the functional layer FNL. In an example embodiment, the thickness of the adhesive layer BDL may be in a range of ≥ 0.1 $\mu$m to ≤ 2 $\mu$m, about 0.5 $\mu$m to ≤ 2, about 0.1 $\mu$m to ≤ 1 $\mu$m, or ≥ 0.5 $\mu$m to ≤ 1$\mu$m. Within the above range, the adhesive layer BDL may enhance the adhesion of the functional layer FNL while simultaneously or contemporaneously reducing or preventing the adhesive layer BDL from acting as an excessive or substantial resistance layer in the positive electrode CTH.

The adhesive layer BDL may include a binder. For convenience of description, the binder within the functional layer FNL and the binder within the adhesive layer BDL may each be referred to as a first binder and a second binder. As the binder, any binder commonly used in the field of rechargeable lithium batteries may be used. That is, the first and second binders may be the same as the binders in the positive electrode active material layer described below.

In an example embodiment, the binder of the adhesive layer BDL and the binder of functional layer FNL may be different from each other. That is, the first binder and the second binder may be different from each other. For example, the first binder may include at least one of polyvinylchloride, carboxylated polyvinylchloride, polyvinylfluoride, polyvinylalcohol, polyacrylonitrile, polyacrylic acid, ethylene propylene copolymer, polystyrene, polyurethane, polytetrafluoroethylene, polyvinylidene fluoride, polyethylene, polypropylene, polyamideimide, or polyimide.

For example, the second binder may include at least one of a styrene-butadiene rubber, a (meth)acrylated styrene-butadiene rubber, (meth)acrylonitrile-butadiene rubber, (meth)acrylic rubber, butyl rubber, fluororubber, styrene-acrylic rubber (SAR), polyacrylic acid, polyethylene oxide, polyvinylpyrrolidone, polyepichlorohydrin, polyphosphazene, poly (meth)acryllonitrile, ethylene propylene diene copolymer, polyvinyl pyridine, chlorosulfonated polyethylene, latex, polyester resin, a (meth)acrylic resin, a phenol resin, an epoxy resin, or polyvinyl alcohol.

By using different binders for the adhesive layer BDL and the functional layer FNL, a difference in adhesion between the adhesive layer BDL and the functional layer FNL may be achieved. As a result, the aforementioned effects of the functional layer FNL due to tensile elasticity may be improved or maximized.

The positive electrode CTH according to example embodiments of the present disclosure may include the positive electrode active material layer AML1. The positive electrode active material layer AML1 may be disposed on the functional layer FNL. The positive electrode active material layer AML1 may include a positive electrode active material CMP. The positive electrode active material layer AML1 may include a conductive material CDM1 and/or a binder BND1. In addition, the positive electrode active material layer AML1 may further include other additives.

The binder BND1 is configured to attach the positive electrode active material CMP particles to each other, and to attach the positive electrode active material CMP to the current collector COL1. Examples of the binder BND1 may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth) acrylated styrene-butadiene rubber, an epoxy resin, a (meth)acrylic resin, a polyester resin, nylon, and the like, as non-limiting examples.

The conductive material CDM1 may be used to impart conductivity (e.g., electrical conductivity) to the electrode. Any material that does not cause chemical change (e.g., does not cause an undesirable chemical change in the rechargeable lithium battery), and that conducts electrons, can be used in the battery. Examples of the conductive material CDM1 may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

The positive electrode active material CMP may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$ ($0.90 \le a \le 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material (CMP) may be in a range of ≥ 90 wt% to ≤ 99.5 wt% based on a total weight of the positive electrode active material layer AML1. Amounts of the binder BND1 and the conductive material CDM1 may be in a range of ≥ 0.5 wt% to ≤ 5 wt%, respectively, based on a total weight of the positive electrode active material layer AML1.

In an example embodiment, a thickness of the adhesive layer BDL is in a range of ≥ 0.3 μm to ≤ 1 μm, and a thickness of the functional layer FNL is in a range of≥ 2 μm to ≤12 μm.

In an example embodiment, the functional layer may include 60 wt% to 80 wt% of the first functional particle FNP1, and 10 wt% to 30 wt% of the second functional particle FNP2.

In an example embodiment, a total content of the first functional particle FNP1 and the second functional particle FNP2 may be in a range of ≥ 70 wt% to 90 wt%, based on a total weight of the functional layer FNL.

**Method for Manufacturing Positive Electrode**

Hereinafter, a method for manufacturing a positive electrode according to example embodiments of the present disclosure is described with reference to the drawings. A method for manufacturing a positive electrode according to example embodiments of the present disclosure may include preparing a metal substrate, forming an adhesive layer by applying an adhesive composition on the metal substrate, forming a functional layer by applying a functional composition on the adhesive layer, and forming a positive electrode active material layer by applying a positive electrode composition on the functional layer.

FIG. 8 shows a metal substrate COL1. As an example, the metal substrate COL1 may be provided while moving in one direction. The metal substrate COL1 may provide a reference surface to which the composition described below is applied. The composition may be applied on one side, or on both sides, of the metal substrate COL1. In an example embodiment, a plurality of layers may be formed in such a way that the composition is applied on the metal substrate COL1 moving in one direction. For example, the metal substrate COL1 may include a plate or foil including at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li) or alloys thereof. The metal substrate COL1 may constitute a current collector.

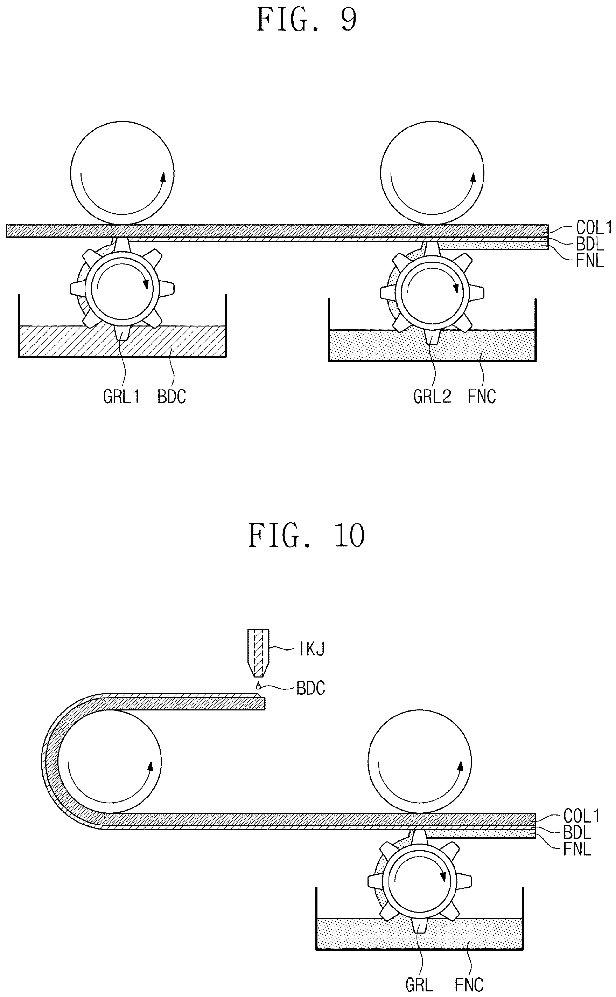

FIGS. 9 and 10 illustrate the formation of the adhesive layer BDL and the formation of the functional layer FNL in a method for manufacturing a positive electrode according to an example embodiment of the present disclosure. Referring to FIGS. 9 and 10, an adhesive composition BDC may be applied onto the metal substrate COL1 provided in one direction. By applying the adhesive composition BDC, the adhesive layer BDL may be formed on the metal substrate COL1. Although not shown, the formation method may further include a process of drying the adhesive composition BDC after the adhesive composition BDC has been applied.

A functional composition FNC may then be applied onto the adhesive layer BDL. By applying the functional composition FNC, a functional layer FNL on the adhesive layer BDL may be formed. In the case of the functional layer, an additional drying process may also be included. As such, by performing the formation of the adhesive layer BDL and the functional layer FNL through a series of continuous processes, the mass productivity and efficiency of positive electrode manufacturing may be improved.

For example, the application of the composition onto the metal substrate may be performed using a gravure coating method. The gravure coating may apply the composition onto the metal substrate via a gravure roll. The gravure roll may include a plurality of grooves on its surface. The coating liquid or composition may be transferred onto the surface of the metal substrate through these grooves. By adjusting the depth and size of the grooves, a coating thickness and pattern may be controlled.

By uniformly forming the composition on the metal substrate through a gravure coating method, the consistency of the process may be improved. Therefore, it is possible to improve mass productivity and quality of products in a mass production process.

As another example, an inkjet coating method may be used to apply the composition on the metal substrate. The inkjet coating may apply the composition onto the metal substrate via an inkjet nozzle. The inkjet coating may improve the precision of the coating layer by precisely adjusting the jetting amount, position, and pattern of the composition. In particular, the composition may be applied relatively thin to form a thin layer.

The functional composition FNC may include a functional particle and a first binder. The functional particle may include, for example, at least one of boron nitride (BN), aluminum nitride (AlN), alumina (or aluminum oxide) ($Al_2O_3$), silicon nitride ($Si_3N_4$), boehmite, zeolite, or kaolinite.

The functional composition FNC may include a conductive material. The conductive material may include, for example, at least one of graphite, carbon black, acetylene black, carbon nanotubes, carbon nanofibers, carbon nanobelts, carbon nanorods, or graphene. A content of conductive material in the functional composition FNC may be in a range of $\geq$ 0.1 wt% to $\leq$ 10 wt%.

The adhesive composition BDC may include a second binder. The first binder and the second binder may be the same, or may be different. For the functional composition FNC and the adhesive composition BDC, the above description of the functional particle and the binder in the positive electrode is equally applicable. For example, a content of functional particle may be in a range of $\geq$ 50 wt% to $\leq$ 95 wt%, based on a total weight of solids in the functional composition FNC.

In an example embodiment, a thickness of the adhesive layer BDL may be in a range of $\geq$ 0.1 $\mu$m to $\leq$ 2 $\mu$m, about 0.5 $\mu$m to $\leq$ 2, about 0.1 $\mu$m to $\leq$ 1 $\mu$m, or $\geq$ 0.5 $\mu$m to $\leq$ 1 $\mu$m. Within the above range, the adhesive layer BDL may enhance the adhesion of the functional layer FNL while simultaneously or contemporaneously reducing or preventing the functional layer FNL from acting as an excessive or substantial resistance layer.

In an example embodiment, a thickness of the functional layer FNL may be in a range of $\geq$ 0.5 $\mu$m and about 10 $\mu$m, or $\geq$ 0.5 $\mu$m to $\leq$ 5 $\mu$m. When the thickness of the functional layer FNL is relatively small, the aforementioned electrical blocking effect may not be effectively realized. On the other hand, when the thickness of the functional layer FNL is too large, the thickness of the functional layer FNL may excessively or substantially increase the resistance of the positive electrode, thereby degrading the performance of the cell.

In an example embodiment, referring to FIG. 9, forming the adhesive layer BDL and forming the functional layer FNL both may be performed using a gravure coating method. A first gravure roll GRL1 may transfer the adhesive composition BDC onto the metal substrate COL1. A second gravure roll GRL2 may transfer the functional composition FNC onto the metal substrate COL1. For example, the second gravure roll GRL2 may transfer the functional composition FNC onto the metal substrate COL1 on which the adhesive layer BDL is formed. The adhesive layer BDL and the functional layer FNL may be formed on the metal substrate COL1 through gravure coating, e.g., sequential gravure coating.

In an example embodiment, referring to FIG. 10, forming the adhesive layer BDL may be performed through inkjet coating, and forming the functional layer FNL may be performed through gravure coating. An inkjet nozzle IKJ may transfer the adhesive composition BDC onto the metal substrate COL1. A gravure roll GRL may transfer the functional composition FNC onto the metal substrate COL1. For example, the gravure roll GRL may transfer the functional composition FNC onto the metal substrate COL1 on which the adhesive layer BDL is formed. Thus, the inkjet coating and the gravure coating are performed, e.g., sequentially performed, whereby the adhesive layer BDL and the functional layer FNL may be formed on the metal base material COL1. Although not shown, it is also possible that the gravure coating is performed first, and the inkjet coating is performed sequentially.

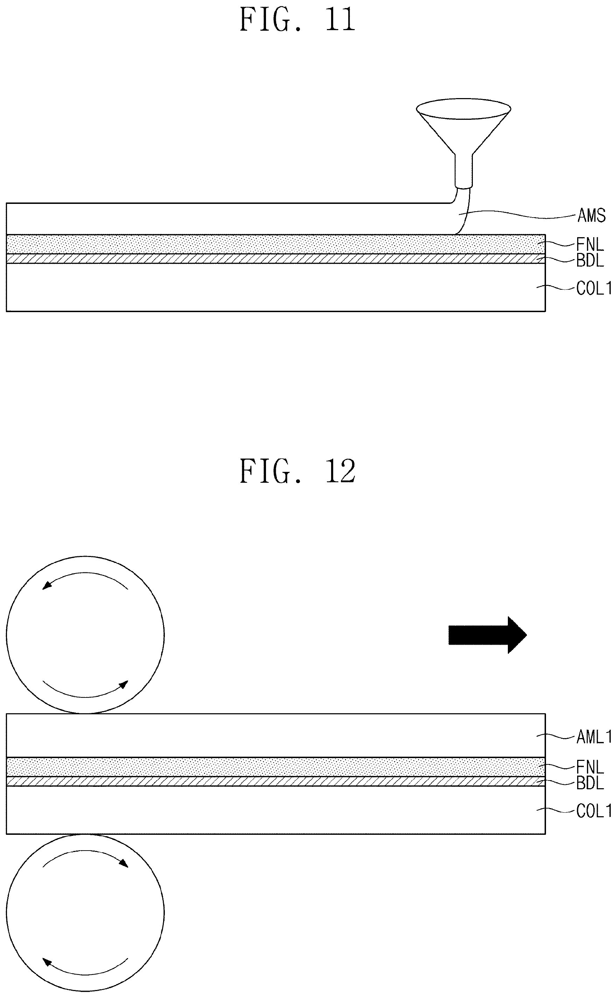

FIG. 11 illustrates forming a positive electrode active material layer AML1 on the metal substrate COL1. For example, the positive electrode active material layer may be formed by applying a positive electrode composition onto the metal substrate COL1 on which the adhesive layer BDL and the functional layer FNL are formed.

The positive electrode composition AMS may include a positive electrode active material, a conductive material, a binder, and the like, and may further include other commonly used additives. The positive electrode composition AMS may be a wet composition mixed in a solvent, or a dry composition that does not include a solvent. When applying the wet composition, the positive electrode composition AMS may further include an additional drying process.

FIG. 12 illustrates rolling of the positive electrode active material layer AML1. Through an additional rolling process, a compaction density of the positive electrode active material layer AML1 may be improved, thereby enhancing the energy density per unit volume. Furthermore, by increasing the adhesion between particles within the positive electrode active material AML1, electrochemical performance may be enhanced. By uniformly forming the positive electrode active material layer AML1 through rolling, electrochemical stability and structural stability may be provided.

Although the method for manufacturing the positive electrode is described with reference to the example embodiment of the present disclosure, other conventional matters related to the manufacture of the rechargeable lithium battery can be applied.

## Negative Electrode (ANO)

A negative electrode ANO according to an example embodiment of the present disclosure may include a negative electrode current collector and a negative electrode active material layer on the negative electrode current collector. The negative electrode active material layer may include a negative electrode active material, and may further include a binder and/or a conductive material.

For example, the negative electrode active material layer may include about 90 wt % to ≤ 99 wt % of a negative electrode active material, about 0.5 wt % to ≤ 5 wt % of a binder, and about 0 wt % to ≤ 5 wt% of a conductive material.

The binder may attach the negative electrode active material particles to each other, and to attach the negative active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause a chemical change (e.g., does not cause an undesirable chemical change in the rechargeable lithium

battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless-steel foil, a titanium foil, a nickel foam, a copper foam, a polymer substrate coated with a conductive metal, or a combination thereof.

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), a Si-Q alloy (where Q is or includes an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

## Electrolyte System (ELS)

A rechargeable lithium battery according to an example embodiment of the present disclosure may include an electrolyte system ELS. The electrolyte system ELS may be disposed between the positive electrode CTH and the negative electrode ANO. The electrolyte system ELS may include an electrolyte to provide a migration path of lithium ions between the positive electrode CTH and the negative electrode ANO. In addition, the electrolyte system ELS may reduce or prevent electrical short-circuit between the positive electrode CTH and the negative electrode ANO, and physically separate the positive electrode CTH and the negative electrode ANO.

In an example embodiment, the electrolyte system ELS may include an electrolyte solution and a separator. The separator may be present between the positive electrode and the negative electrode, and may separate the positive electrode from the negative electrode. The electrolyte solution may be impregnated throughout substantially the entire lithium secondary battery.

The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including any one or more polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphe-

nylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof. The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, to enable an operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro (oxalato)borate (LiDFOB), lithium difluorobis(oxalato)phosphate (LiDFBOP), and lithium bis(oxalato) borate (LiBOB).

In an example embodiment, the electrolyte system ELS may further include cross-linkable polymers to form a cross-linked network. The cross-linked network may provide mechanical properties to the electrolyte system.

In an example embodiment, the electrolyte system ELS may include a solid electrolyte layer. The solid electrolyte layer may include a solid electrolyte, providing lithium-ion conductivity while simultaneously or contemporaneously constituting a separator that physically separates the positive electrode and the negative electrode. The solid electrolyte layer may provide a desired or improved thermal and chemical stability, effectively reducing or preventing safety issues in rechargeable lithium batteries, such as electrical short circuits or electrolyte leakage. For example, the solid electrolyte layer may include a sulfide-based solid electrolyte. The sulfide-based solid electrolyte may include, for example, an argyrodite-type solid electrolyte.

FIG. 13 is a flow chart illustrating a method of manufacturing a positive electrode, according to an example embodiment. In FIG. 13, the method 1300 includes operation 1310, which includes preparing a metal substrate. Operation 1320 includes forming an adhesive layer by applying an adhesive composition on the metal substrate. For example, the adhesive composition includes a second binder. In another example, a thickness of the adhesive layer is in a range of $\geq 0.1$ $\mu$m to $\leq 2$ $\mu$m.

Operation 1330 includes forming a functional layer by applying a functional composition on the adhesive layer. For example, the functional composition includes a functional particle and a first binder. In an example, the first binder and the second binder are different from each other. In another example, the functional particle includes at least one of boron nitride (BN), aluminum nitride (AlN), alumina ($Al_2O_3$), silicon nitride ($Si_3N_4$), boehmite, zeolite, or kaolinite. In yet another example, a thickness of the functional layer is in a range of $\geq 0.5$ $\mu$m to $\leq 10$ $\mu$m. For example, a content of the functional particle is in a range of $\geq 50$ wt% to $\leq 95$ wt% based on a total weight of solids in the functional composition. Operation 1340 includes forming a positive electrode active material layer by applying a positive electrode composition on the functional layer.

The rechargeable lithium battery may be classified into a cylindrical type, a prismatic type, a pouch type, a coin

type, or the like according to its shape. The rechargeable lithium battery according to example embodiments of the present disclosure may be applicable to, e.g., an automobile, a mobile phone, and/or various types of electric devices, and the like, and the present disclosure is not limited thereto.

Hereinafter, examples and comparative examples of the present disclosure are described. However, the present disclosure is not limited to the following examples.

## Embodiments

### Example 1

### Preparation of Positive Electrode

Adhesive Layer:

A Styrene-acrylic rubber (SAR) binder was mixed with 30 wt% in D.I. (deionized) solvent to prepare adhesive composition. The prepared adhesive composition was applied onto an aluminum current collector using a gravure roll coating method, and subsequently dried to form an adhesive layer. The thickness of the adhesive layer was approximately 0.5 μm.

Functional Layer:

A functional composition was prepared by mixing hexagonal boron nitride (h-BN) as a first functional particle, a PVdF binder, and nano-carbon as a conductive additive in N-methyl-2-pyrrolidone (NMP) solvent. The h-BN had a major axis of approximately 5 μm and a minor axis of approximately 180 nm. The composition of the prepared functional composition was 87 wt% of h-BN, 10 wt% of PVdF, and 3 wt% of conductive material.

The prepared functional composition was applied onto the adhesive layer using a gravure roll coating method, and subsequently dried to form a functional layer. The thickness of the functional layer was approximately 2 μm.

Positive Electrode Active Material Layer:

Positive electrode active material particles of $LiCoO_2$ with an average particle size of approximately 15 μm were prepared. Carbon black was prepared as a conductive material. As a binder, a mixture of PVdF and H-NBR in 99:1 weight ratio was prepared. A positive electrode composition was prepared by mixing the above materials in N-methyl-2-pyrrolidone (NMP) solvent with the following composition:

95 wt% positive electrode active material (LiCoO2)
2 wt% conductive material (carbon black)
3 wt% binder (PVdF/H-NBR mixture)

The prepared positive electrode composition was applied onto the functional layer, dried, and then subjected to a rolling process to produce a positive electrode.

### Preparation of Negative Electrode

A negative electrode active material composition was prepared by mixing graphite, a binder, and a conductive material in D.I. solvent. The prepared composition was applied onto a copper current collector, dried, then subjected to a rolling process to produce a negative electrode.

### Production of Rechargeable lithium battery

A rechargeable lithium battery was produced using the positive electrode, the negative electrode, and an electrolytic solution. A porous polyethylene (PE) film separator was interposed between the positive electrode and the negative electrode, and the electrolyte solution was injected to complete the rechargeable lithium battery. As the electrolyte solution, a solution of 1.0M $LiPF_6$ dissolved in ethylene carbonate (EC) and diethyl carbonate (DEC) at a 50:50 volume ration was used.

**Example 2**

A rechargeable lithium battery was produced in the same manner as in Example 1, with a difference that the thickness of the functional layer was adjusted to approximately 5 μm.

**Example 3**

A rechargeable lithium battery was produced in the same manner as in Example 1, with a difference that the thickness of the functional layer was adjusted to approximately 8 μm.

**Example 4**

A rechargeable lithium battery was produced in the same manner as in Example 1, with a difference that the thickness of the functional layer was adjusted to approximately 12 μm.

**Example 5**

A rechargeable lithium battery was produced in the same manner as in Example 1, with a difference that the thickness of the adhesive layer was adjusted to approximately 0.1 μm.

**Example 6**

A rechargeable lithium battery was produced in the same manner as in Example 1, with a difference that the thickness of the adhesive layer was adjusted to approximately 1 μm.

**Example** 7

A functional composition was prepared by additionally including boehmite as a functional particle, with an average particle size (D50) of 450 nm. Specifically, the composition was prepared by mixing the following components in N-methyl-2-pyrrolidone (NMP) solvent:

70 wt% first functional particle (h-BN)
20 wt% second functional particle (boehmite)
10 wt% binder (PVdF)

Except for this, a rechargeable lithium battery was produced in the same manner as in Example 1.

**Comparative Example 1**

A rechargeable lithium battery was produced in the same manner as in Example 1, with a difference that the adhesive layer was omitted, and the functional layer was directly formed on the aluminum current collector.

**Comparative Example 2**

A rechargeable lithium battery was produced in the same manner as in Example 1, with a difference that both the adhesive layer and the functional layer were omitted, and the positive electrode active material layer was directly formed on the aluminum current collector.
Table 1 below summarizes the examples and comparative examples.

Table 1:

| | Adhesive Layer | Functional Layer | Composition of Functional Layer |
|---|---|---|---|
| Example 1 | 0.5μm | 2μm | h-BN |
| Example 2 | 0.5μm | 5μm | h-BN |
| Example 3 | 0.5μm | 8μm | h-BN |
| Example 4 | 0.5μm | 12μm | h-BN |

(continued)

| | Adhesive Layer | Functional Layer | Composition of Functional Layer |
|---|---|---|---|
| Example 5 | 0.1μm | 2μm | h-BN |
| Example 6 | 1μm | 2μm | h-BN |
| Example 7 | 0.5μm | 2μm | h-BN + boehmite |
| Comparative Example 1 | - | 2μm | h-BN |
| Comparative Example 2 | - | - | - |

**Evaluation Example 1: Evaluation of Penetration Safety**

Rechargeable lithium batteries, each including the positive electrode according to the examples and comparative examples, were fully charged, and then batteries were prepared for each case. A nail penetration test was conducted using a 3 mm diameter nail, which completely penetrated the center of the battery at a speed of 60 mm/sec.

1. Stable stage
2. Gas Emission stage: The stage where smoke or gas is emitted, indicating the initial signs of a reaction.
3. Ignition stage: The stage where flames appear due to an internal temperature increase, initiating combustion.
4. Explosion stage: The stage where a rapid fire and explosion occur.

The rechargeable lithium batteries were assessed based on the above four-stage criteria. Specifically, when stage 3 or stage 4 occurred at least once, the battery was classified as a defective cell.
The results are summarized in Table 2 below.

Table 2:

| | Step 1 | Step 2 | Step 3 | Step 4 | Results |
|---|---|---|---|---|---|
| Example 1 | 8 | 2 | - | - | Normal |
| Example 2 | 9 | 1 | - | - | Normal |
| Example 3 | 10 | - | - | - | Normal |
| Example 4 | 10 | - | - | - | Normal |
| Example 5 | 2 | 6 | 2 | - | Defective |
| Example 6 | 8 | 2 | - | - | Normal |
| Example Embodiment 7 | 9 | 1 | - | - | Normal |
| Comparative Example 1 | - | 6 | 4 | - | Defective |
| Comparative Example 2 | - | - | 7 | 3 | Defective |

Referring to the results in Table 2, it can be seen that the occurrence frequency of the 3rd stage and the 4th stage is significantly high in the case of Comparative Examples 1 and 2. In contrast, it can be seen that the positive electrode according to the example embodiment of the present disclosure maintains a stable state.
However, it was confirmed that ignition occurred in some cells when the thickness of the adhesive layer became relatively thin as in Example 6. It is presumed that this is because when the adhesive layer is relatively below a certain level, sufficient stability is not provided.

**Evaluation Example 2: Measurement of Resistance of Positive Electrode**

The resistance of a positive electrode was measured. The prepared positive electrode was measured via 4-point probe measurement. After four probes are placed on the surface of the positive electrode, a current is passed through the two probes to generate a voltage. The voltage drop was then measured on the remaining two probes to calculate the contact resistance.
The resistance measurements for Examples 1-3 and Comparative Example 3 are shown in Table 3 below.

Table 3:

| | Composition and Thickness of Functional layer | Contact Resistance (Ω) |
|---|---|---|
| Example 1 | h-BN/2μm | 38.31 |
| Example 2 | h-BN/5μm | 49.23 |
| Example 3 | h-BN/8μm | 60.93 |
| Example 4 | h-BN/12μm | 134.05 |

With reference to the above results, it can be seen that the resistance of the positive electrode increases as the thickness of the functional layer increases. It can be seen that it is necessary to simultaneously or contemporaneously maintain the performance of the cell by adjusting the thickness in an appropriate or desired range while improving the stability through the functional layer.

**Evaluation Example 3: Young's Modulus of Functional Layer**

The Young's modulus of the positive electrode according to an example embodiment of the present disclosure was measured. Specifically, a functional layer thin film of about 60 μm was prepared with the same composition as in Examples. The Young's modulus of the functional layer thin film was measured by using universal testing machine (UTM). Specifically, after both ends of the thin film are fixed to the clamp, a tensile load is applied to the thin film, and the amount of change in the length of the thin film according to the load is recorded. The slopes of the stress and the strain thus measured were calculated to calculate the Young's modulus. The stress and the strain can be calculated by the following equations, respectively.

Formula 1 $\sigma$(stress) = F(tensile load)/A(cross-sectional area of thin film = width $\times$ thickness) Formula 1

Formula 2 $\varepsilon$(strain) = $\Delta$L(length change amount)/$L_0$(initial length) Formula 2

The results are shown in Table 4 below.

Table 4:

| | Composition of Functional | Young's Modulus (GPa) |
|---|---|---|
| | layer | |
| Example 1 | h-BN | 2.1 |
| Example 6 | h-BN + boehmite | 5.72 |

As shown in the above results, the Young's modulus of the functional layer according to the example embodiment of the present disclosure was found to be in a range of 0.1 GPa to 10 GPa. Within this range, the functional layer can effectively perform its intended role in the positive electrode.

According to one aspect, the structural stability of the positive electrode can be improved by improving the adhesion of the surface of the positive electrode current collector.

According to another aspect, the inclusion of a functional layer on the positive electrode current collector can provide mechanical/electrical stability of the positive electrode.

While the present disclosure has been described with reference to example embodiments, it should be understood that these example embodiments are provided for illustrative purposes only, and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

**1.** A positive electrode (CTH) comprising:

a current collector (COL1);
an adhesive layer (BDL) on the current collector (COL1);
a functional layer (FNL) on the adhesive layer (BDL); and
a positive electrode active material layer (AML1) on the functional layer (FNL),
wherein the functional layer (FNL) comprises a first binder and a first functional particle (FNP1),
wherein the adhesive layer (BDL) comprises a second binder,
wherein the first functional particle (FNP1) has a plate-like shape having a major axis and a minor axis, and
wherein the first functional particle (FNP1) is arranged such that the major axis is substantially parallel to a plane of the current collector (COL1).

**2.** The positive electrode (CTH) as claimed in claim 1, wherein the first functional particle (FNP1) comprises at least one of boron nitride (BN), aluminum nitride (AlN), alumina ($Al_2O_3$), silicon nitride ($Si_3N_4$), boehmite, zeolite, or kaolinite.

**3.** The positive electrode (CTH) as claimed in claim 1 or 2, wherein an aspect ratio of the first functional particle (FNP1) is in a range of $\geq 5$ to $\leq 30$.

**4.** The positive electrode (CTH) as claimed in any one of claims 1 to 3, wherein an average particle size of the functional particle (FNP1) is in a range of $\geq 5$ μm to $\leq 10$ μm.

**5.** The positive electrode (CTH) as claimed in any one of claims 1 to 4, wherein a Young's Modulus of the functional layer (FNL) is in a range of $\geq 1$ GPa to $\leq 10$ GPa.

**6.** The positive electrode (CTH) as claimed in any one of claims 1 to 5, wherein a thickness of the adhesive layer BDL is smaller than a thickness of the functional layer (FNL), and
wherein the thickness of the adhesive layer (BDL) is in a range of $\geq 0.1$ μm to $\leq 1$ μm.

**7.** The positive electrode (CTH) as claimed in any one of claims 1 to 6, wherein a thickness of the functional layer (FNL) is in a range of $\geq 0.5$ μm to $\leq 10$ μm.

**8.** The positive electrode (CTH) as claimed in any one of claims 1 to 7, wherein the functional layer (FNL) further comprises a second functional particle (FNP2) that is different from the first functional particle (FNP1), and
wherein the second functional particle (FNP2) comprises at least one of boron nitride (BN), aluminum nitride (AlN), alumina ($Al_2O_3$), silicon nitride ($Si_3N_4$), boehmite, zeolite, or kaolinite.

**9.** The positive electrode (CTH) as claimed in any one of claims 1 to 8, wherein the functional layer (FNL) further comprises a conductive material (CDM1), and
wherein the conductive material (CDM1) comprises at least one of graphite, carbon black, acetylene black, carbon nanotube, carbon nanofiber, carbon nanobelt, carbon nanorod, or graphene.

**10.** The positive electrode (CTH) as claimed in any one of claims 1 to 9, wherein the first binder and the second binder are different from each other.

**11.** The positive electrode (CTH) as claimed in claims 1 to 10, wherein the first binder comprises at least one of polyvinylchloride, carboxylated polyvinylchloride, polyvinylfluoride, polyvinylalcohol, polyacrylonitrile, polyacrylic acid, ethylene-propylene copolymer, polystyrene, polyurethane, polytetrafluoroethylene, polyvinylidene fluoride, polyethylene, polypropylene, polyamide-imide, or polyimide, and
wherein the second binder comprises at least one of styrene-butadiene rubber, (meth)acrylated styrene-butadiene rubber, (meth)acrylonitrile-butadiene rubber, (meth)acrylic rubber, butyl rubber, fluororubber, styrene-acrylic rubber (SAR), polyacrylic acid, polyethylene oxide, polyvinylpyrrolidone, polyepichlorohydrin, polyphosphazene, poly (meth)acrylonitrile, ethylene-propylene-diene copolymer, polyvinyl pyridine, chlorosulfonated polyethylene, latex, polyester resin, (meth)acrylic resin, phenol resin, epoxy resin, or polyvinyl alcohol.

**12.** The positive electrode (CTH) as claimed in claims 1 to 11, wherein a content of the first functional particle is in a range of $\geq 50$ wt% to $\leq 95$ wt% based on a total weight of the functional layer.

**13.** A method for manufacturing a positive electrode (CTH), the method comprising:

preparing a metal substrate (COL1);

forming an adhesive layer (BDL) by applying an adhesive composition (BDC) on the metal substrate (COL1); forming a functional layer (FNL) by applying a functional composition (FNC) on the adhesive layer (BDL); and forming a positive electrode active material layer (AML1) by applying a positive electrode composition (AMS) on the functional layer (FNL),

wherein the functional composition (FNC) comprises a first functional particle (FNP1) and a first binder, wherein the adhesive composition (BDC) comprises a second binder, and

wherein the first functional particle (FNP1) has a plate-like shape having a major axis and a minor axis, and wherein the first functional particle (FNP1) is arranged such that the major axis is substantially parallel to a plane of the metal substrate (COL1).

**14.** The method as claimed in claim 13, wherein the first functional particle (FNP1) comprises comprises at least one of boron nitride (BN), aluminum nitride (AlN), alumina ($Al_2O_3$), silicon nitride ($Si_3N_4$), boehmite, zeolite, or kaolinite.

**15.** The method as claimed in claims 13 to 14, wherein an average particle size of the functional particle (FNP1) is in a range of $\geq 5$ $\mu$m to $\leq 10$ $\mu$m.

FIG. 1

CTH
ELS
ANO

FIG. 2

CTH
AML1
FNL
BDL
COL1
M
D3
D1

FIG. 3

M
AML1
FNL
BDL
COL1
CDM1
BND1
CMP
FNP1
D3
D1

FIG. 4

M
CDM1
CMP
AML1
BND1
FNP1
FNL
BDL
COL1
ECM
D3
D1

FIG. 5

M
AML1
FNL
BDL
COL1
CDM1
BND1
CMP
FNP1
CDM2
D3
D1

FIG. 6

M
AML1
FNL
BDL
COL1
CDM1
BND1
CMP
FNP1
FNP2
D3
D1

FIG. 7

FNP1
LE
DE
TK
D3
D2
D1

FIG. 8

COL1

FIG. 9

COL1
BDL
FNL
GRL1
BDC
GRL2
FNC

FIG. 10

IKJ
BDC
COL1
BDL
FNL
GRL
FNC

FIG. 11

AMS
FNL
BDL
COL1

FIG. 12

AML1
FNL
BDL
COL1

Europäisches
Patentamt
European
Patent Office
Office européen
des brevets

# EUROPEAN SEARCH REPORT

Application Number
EP 26 15 3346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 2 212 949 B1 (SION POWER CORP [US]) 7 December 2016 (2016-12-07)<br>* paragraphs [0027], [0030], [0035] - [0037], [0041] - [0042], [0046] - [0047]; figure 1; examples 3,6 * | 1,3-7, 9-13,15<br>2,8,14 | INV.<br>H01M10/42<br>H01M4/04<br>H01M4/131<br>H01M4/1391<br>H01M4/62<br>H01M4/66 |
| Y | CN 111 697 230 B (TIANJIN LISHEN BATTERY JOINT STOCK CO LTD) 3 October 2023 (2023-10-03)<br>* paragraphs [0051] - [0052], [0061] - [0064], [0067], [0076] - [0078], [0091] - [0095]; examples 1-3 * | 2,8,14 | |
| A | US 2022/037669 A1 (CONTEMPORARY AMPEREX TECHNOLOGY CO LTD [CN]) 3 February 2022 (2022-02-03)<br>* paragraphs [0069], [0086], [0103], [0107] - [0115], [0158], [0168], [0170], [0220]; figures 9,11; table 6 * | 1-15 | |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 17 June 2026 | Girard, Gaëtan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

# ANNEX TO THE EUROPEAN SEARCH REPORT ON EUROPEAN PATENT APPLICATION NO.

EP 26 15 3346

This annex lists the patent family members relating to the patent documents cited in the above-mentioned European search report. The members are as contained in the European Patent Office EDP file on The European Patent Office is in no way liable for these particulars which are merely given for the purpose of information.

17-06-2026

| Patent document cited in search report | Publication date | Patent family member(s) | Publication date |
|---|---|---|---|
| EP 2212949 B1 | 07-12-2016 | CN 101884125 A | 10-11-2010 |
| | | CN 103633285 A | 12-03-2014 |
| | | EP 2212949 A1 | 04-08-2010 |
| | | JP 2011501383 A | 06-01-2011 |
| | | KR 20100084635 A | 27-07-2010 |
| | | US 2010291442 A1 | 18-11-2010 |
| | | US 2014072873 A1 | 13-03-2014 |
| | | WO 2009054987 A1 | 30-04-2009 |
| CN 111697230 B | 03-10-2023 | NONE | |
| US 2022037669 A1 | 03-02-2022 | CN 110943222 A | 31-03-2020 |
| | | EP 3923388 A1 | 15-12-2021 |
| | | HU E063011 T2 | 28-12-2023 |
| | | US 2022037669 A1 | 03-02-2022 |
| | | WO 2020211453 A1 | 22-10-2020 |

EPO FORM P0459

For more details about this annex : see Official Journal of the European Patent Office, No. 12/82